(19) **Europäisches Patentamt / European Patent Office / Office européen des brevets**

(11) **EP 2 876 462 B1**

(12) **FASCICULE DE BREVET EUROPEEN**

(45) Date de publication et mention de la délivrance du brevet:
**03.08.2016 Bulletin 2016/31**

(51) Int Cl.:
*G01S 19/08* [(2010.01)]  *G01S 19/20* [(2010.01)]

(21) Numéro de dépôt: **14194336.5**

(22) Date de dépôt: **21.11.2014**

(54) **Système et procédé de détermination de l'erreur de position d'un récepteur de localisation satellitaire**

System und Verfahren zur Bestimmung von Positionsfehlern eines Satellitennavigationsempfängers

System and method for determining the position error of a satellite positioning receiver

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.11.2013 FR 1302697**

(43) Date de publication de la demande:
**27.05.2015 Bulletin 2015/22**

(73) Titulaire: **Thales**
**92400 Courbevoie (FR)**

(72) Inventeur: **Van den Bossche, Mathias**
**31120 Goyrans (FR)**

(74) Mandataire: **Priori, Enrico et al**
**Marks & Clerk France**
**Conseils en Propriété Industrielle**
**Immeuble «Visium»**
**22, avenue Aristide Briand**
**94117 Arcueil Cedex (FR)**

(56) Documents cités:
**WO-A1-2009/112483     WO-A2-2004/029807**

- **WALTER TODD ET AL: "Future Architectures to Provide Aviation Integrity", NTM 2008 - PROCEEDINGS OF THE 2008 NATIONAL TECHNICAL MEETING OF THE INSTITUTE OF NAVIGATION, THE INSTITUTE OF NAVIGATION, 8551 RIXLEW LANE SUITE 360 MANASSAS, VA 20109, USA, 30 janvier 2008 (2008-01-30), page 394, XP056005159,**
- **WALTER T ET AL: "Vertical Protection Level Equations for Dual Frequency SBAS", GNSS 2010 - PROCEEDINGS OF THE 23RD INTERNATIONAL TECHNICAL MEETING OF THE SATELLITE DIVISION OF THE INSTITUTE OF NAVIGATION (ION GNSS 2010), THE INSTITUTE OF NAVIGATION, 8551 RIXLEW LANE SUITE 360 MANASSAS, VA 20109, USA, 24 septembre 2010 (2010-09-24), pages 2031-2041, XP056000313,**
- **ANGUS ET AL: "TOWARD COMPUTATION OF EXACT HORIZONTAL PROTECTION LIMITS FOR SATELLITE- BASED NAVIGATION SYSTEMS", NAVIGATION, INSTITUTE OF NAVIGATION, FAIRFAX, VA, US, vol. 46, no. 3, 1 décembre 1999 (1999-12-01), pages 217-226, XP056004337, ISSN: 0028-1522**
- **OBER ET AL: "Accuracy and Integrity of Nonlinear Systems", GPS 1999 - PROCEEDINGS OF THE 12TH INTERNATIONAL TECHNICAL MEETING OF THE SATELLITE DIVISION OF THE INSTITUTE OF NAVIGATION (ION GPS 1999), THE INSTITUTE OF NAVIGATION, 8551 RIXLEW LANE SUITE 360 MANASSAS, VA 20109, USA, 17 septembre 1999 (1999-09-17), pages 1211-1216, XP056002992,**

**Description**

L'invention concerne le domaine de la localisation satellitaire. En particulier il concerne la détermination d'une erreur de positionnement que réalise un récepteur en utilisant un système de localisation satellitaire. Ces systèmes sont par exemple implémentés dans les systèmes d'amélioration de la précision de la localisation fournie par le système GPS (acronyme anglais de « Global Positionning System » ou système de localisation mondial en français). Ces systèmes sont aussi nommés systèmes de renforcement de la localisation. Ils sont aussi connus sous l'acronyme anglais de SBAS pour « Satellite-Based Augmentation Systems ». Il est également connu un système connu sous l'acronyme anglais EGNOS pour « European Geostationary Navigation Overlay Service » ou Service Européen de Navigation par Surcouche Géostationnaire comme système de renforcement du GPS.

La connaissance de cette erreur de positionnement du récepteur, permet de déterminer un volume pour lequel la probabilité de présence du récepteur est supérieure à un seuil fixé par un standard. Ainsi la connaissance de ce volume permet par exemple de déterminer la distance minimale à laquelle deux aéronefs ne doivent pas se rapprocher. La connaissance de cette information est en particulier nécessaire pour les services d'intégrité. On appelle service d'intégrité la capacité d'un système à fournir une alarme au pilote lorsque le système de navigation ne peut plus être utilisé avec la performance requise en termes de risques pour l'usager.

Ces systèmes de détermination d'erreur sont utilisables par exemple dans des aéronefs mais également dans des véhicules terrestres ou des navires.

Il est connu dans l'état de la technique des systèmes dans lesquelles des informations représentatives des positions des satellites, et des temps de traversée de la ionosphère ainsi que des informations représentatives de l'erreur sur ces positions et ces temps de traversée sont envoyés aux différents récepteurs. La connaissance de ces informations permet de déterminer l'erreur de position du récepteur, on parle aussi d'intégrité de la position de l'objet localisé par le récepteur.

Il est connu dans l'état de la technique que les informations représentatives des erreurs soient des écarts types margés ($\sigma_i$) des distributions des erreurs commises. Ainsi la distribution des erreurs est modélisée par une loi gaussienne centrée de la forme $N(0, \sigma_i^2)$. Cependant la modélisation de la distribution des erreurs sous forme d'une loi gaussienne centrée est trop grossière, et amène à devoir prendre une marge de sureté, qui dans certains cas est trop importante. C'est en particulier le cas lorsque la combinaison des écarts types margés ($\sigma_i$), de l'erreur de position de chaque satellite utilisé, doit être faible pour permettre une précision suffisante à la réalisation des manoeuvres à exécuter. Dans de tels cas, la marge, prise pour couvrir la non adaptation d'un modèle basé sur des gaussiennes centrées, rend le service trop souvent indisponible. On a de plus pu montrer que l'utilisation de gaussiennes centrées n'est correcte du point de vue mathématique, que si l'on peut faire l'hypothèse que les erreurs sont distribuées de façon uni-modale et symétrique, que rien ne garantit de façon générale.

La présente invention vise à remédier à ces problèmes en proposant un système de détermination de l'erreur de position d'un récepteur dont la précision est accrue par rapport à la précision des systèmes basés sur l'échange des écarts types margés de la distribution de l'erreur sur la position des satellites .

Il est proposé, selon un aspect de l'invention un système de détermination d'une distribution d'une erreur de position d'un récepteur de signaux de localisation. Les signaux étant envoyés par au moins un satellite. Le système comporte ;

- le récepteur dont une position est dite première position et est affectée par une erreur, dite première erreur, présentant une distribution, dite première distribution;
- un premier dispositif de détermination d'au moins une positions du ou de chaque ou d'au moins un satellite, dite deuxième position,
- un dispositif de transmission de la ou de chaque ou d'au moins une deuxième position du premier dispositif de détermination vers le récepteur.

Le système est caractérisé en ce que

- la première distribution est définie par au moins un premier cumulant, d'ordre supérieur à 2,
- le premier dispositif est en outre adapté pour la détermination d'au moins un deuxième cumulant, d'ordre supérieur à 2, représentatif d'une deuxième distribution d'une deuxième erreur sur la deuxième position,
- le dispositif de transmission est en outre adapté pour la transmission du ou de chaque ou d'au moins un deuxième cumulant du premier dispositif de détermination vers le récepteur,
- et en ce que le récepteur comporte:

  o un deuxième dispositif de détermination du ou de chaque ou d'au moins un premier cumulant, à partir de la deuxième position, du deuxième cumulant et d'un modèle de détermination de la première position du récepteur à partir de distances entre le récepteur et le ou les satellites et

o un troisième dispositif de détermination de la première distribution, à partir dudit premier cumulant.

Les premiers et deuxièmes cumulants d'ordre supérieur à deux peuvent aussi être nommés sous l'expression jeu de cumulants ou ensemble de cumulants.

Les cumulants $\kappa_n$ de la variable aléatoire X sont définis par la fonction génératrice des cumulants $g(t)$ :

$$g(t) = \ln\big(\langle e^{iXt}\rangle_X\big) = \sum_{n=0}^{\infty} \frac{(it)^n}{n!} \kappa_n$$

Dans cette équation $\langle\ \rangle_X$ représente l'espérance mathématique de la variable aléatoire $X$ et $\kappa_n$ le cumulant d'ordre $n$.

Le système permet donc la transmission aux récepteurs de signaux satellitaires d'une information représentative de la distribution de l'erreur de position des satellites. De plus l'utilisation de cette information permet de déterminer l'erreur de positionnement que réalise le récepteur en utilisant le système de localisation satellitaire

De plus, l'utilisation des cumulants, permet de transmettre aux usagers une information représentative de la distribution de l'erreur de la position du satellite qui est plus fidèle que dans le cas des systèmes connus dans l'état de la technique. L'utilisation de ces cumulants évite alors d'avoir à prendre autant de marges dans la position et ce pour deux raisons :

- Elle permet de décrire plus finement les distributions d'erreur de positionnement/synchronisation des sources de signal de positionnement, et de ce fait permet d'améliorer la précision de l'information de localisation calculée par le récepteur. La zone de tolérance au risque d'intégrité peut être plus petite que dans les solutions actuelles.

- Elle permet de ne pas avoir à faire une hypothèse dont la base mathématique est fausse, et qui consiste modéliser les erreurs commises pour la position de chaque satellite par une combinaison de gaussiennes centrées $N(0, \sigma_l^2)$ alors que la distribution n'est pas unimodale ou symétrique.

En d'autres termes, la forme de la distribution permise par l'invention est beaucoup plus précise qu'une distribution Gaussienne centrée. Cependant cette forme générique peut être décrite par quelques paramètres seulement, les cumulants. On est donc en mesure de transmettre une information beaucoup plus fine sur la distribution de probabilité des deuxièmes erreurs de positionnement des satellites.

Cette information précise permet alors de modéliser les premières erreurs de position du récepteur de façon aussi fidèle que possible. Ainsi, il n'est pas nécessaire de prendre des marges de sécurité importantes pour assurer la sureté, et il est possible d'utiliser le système de localisation pour la réalisation de manoeuvres dans lesquelles l'exigence de précision est importante.

Selon une caractéristique technique le deuxième dispositif de détermination est adapté pour appliquer le modèle au ou aux deuxièmes cumulants.

Selon une caractéristique technique le premier dispositif de détermination est en outre adapté pour déterminer les deuxièmes cumulants d'ordre 1 à 5, et dans lequel le deuxième dispositif de détermination est en outre adapté pour déterminer les premiers cumulants d'ordre 1 à 5.

Plus il y a de cumulants plus la modélisation va être précise, mais ils sont plus compliqués à mesurer expérimentalement.

Selon une caractéristique technique le troisième dispositif sont adaptés en outre pour utiliser un développement d'Edgeworth.

L'invention concerne aussi un procédé de détermination d'une distribution d'une erreur de position d'un récepteur de signaux de localisation, les signaux étant envoyés par au moins un satellite. Le procédé comporte ;

- une étape de réception, par un récepteur, des signaux de localisation satellitaire, une position du récepteur étant dite première position et est affectée par une erreur, dite première erreur, présentant une distribution, dite première distribution,
- une première étape de détermination, par un premier dispositif de détermination, d'au moins une position du ou de chaque ou d'au moins un satellite, dites deuxièmes positions,
- une étape de transmission, par un dispositif de transmission, de la ou de chaque ou d'au moins une deuxième position du premier dispositif de détermination vers le récepteur,
  Le procédé est caractérisé en ce que

- la première distribution est définie par au moins un premier cumulant, d'ordre supérieur à 2,
- la première étape de détermination est en outre adaptée pour la détermination d'au moins un deuxième cumulant, d'ordre supérieur à 2, représentatif d'une deuxième distribution d'une deuxième erreur sur la deuxième position,
- l'étape de transmission est en outre adaptée pour la transmission du ou de chaque ou d'au moins un deuxième cumulant, associé à ladite deuxième position du premier dispositif de détermination vers le récepteur,
- de plus le procédé comporte :

  o une deuxième étape de détermination, par un deuxième dispositif de détermination dudit récepteur, du ou de chaque ou d'au moins un premier cumulant, à partir de la deuxième position, du deuxième cumulant et d'un modèle de détermination de la première position du récepteur à partir de distances entre le récepteur et le ou les satellites et

  o une troisième étape de détermination par un troisième dispositif de détermination du récepteur, de la première distribution, à partir du premier cumulant

Selon une caractéristique technique la deuxième étape de détermination est adaptée pour appliquer le modèle au ou aux deuxièmes cumulants.

Selon une caractéristique technique la première étape de détermination de détermination est en outre adaptée pour déterminer les deuxièmes cumulants d'ordre 1 à 5, et dans lequel la deuxième étape de détermination est en outre adaptée pour déterminer les premiers cumulants d'ordre 1 à 5.

Selon une caractéristique technique la troisième étape de détermination est adaptée en outre pour utiliser un développement d'Edgeworth.

L'invention sera mieux comprise et d'autres avantages apparaîtront à la lecture de la description détaillée, faite à titre d'exemple non limitatif. Cette description détaillée est réalisée à l'aide des figures suivantes :

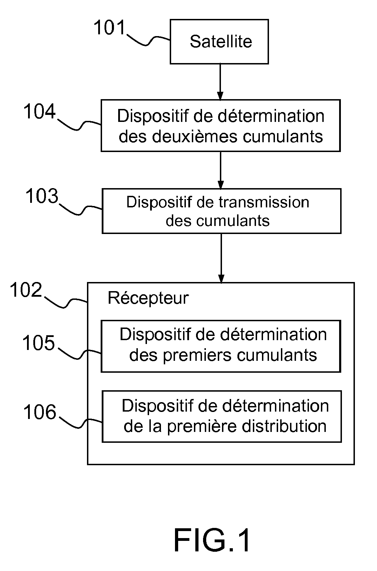

la figure 1 présente un premier mode de réalisation du système présenté dans cette invention

La figure 1 présente le système comportant un satellite 101 et un récepteur de signaux satellitaires 102. Le système permet au récepteur de déterminer la distribution d'une première erreur associée à une première position du récepteur. Cette première distribution de la première erreur est modélisée par au moins un premier ensemble de cumulants d'ordre supérieur à deux.

Le système permet, afin de réaliser cette détermination, la transmission (via un dispositif de transmission 103) de deuxièmes cumulants qui représentent une deuxième distribution représentant une deuxième erreur associée à la deuxième position d'un satellite. La détermination de ces éléments est réalisée par un premier dispositif de détermination 104.

Les premiers cumulants sont déterminés par le récepteur par l'utilisation d'un deuxième dispositif de détermination 105.

Enfin un troisième dispositif 106 permet la détermination de la première distribution, à partir des premiers cumulants

Cette modélisation est basée sur l'utilisation du développement d'Edgeworth de la densité de probabilité de l'erreur associée à la position d'un satellite.

Les cumulants d'une variable aléatoire X distribuée selon une densité de probabilité f (on note $X \sim f$), sont déterminés en introduisant la fonction $\varphi(t) = \langle e^{iXt} \rangle_X$.

- e représente la fonction exponentielle
- $\langle \rangle_X$ représente la moyenne sur les valeurs de $X$
- i étant l'unité imaginaire ($i^2 = -1$).

On remarque que le développement de cette fonction, en fonction des puissances de l'exposant, est une série qui fait intervenir les moments d'ordre $n$ de $f : \mu_n = \langle X^n \rangle$.

$$\varphi(t) = \sum_{n=0}^{\infty} \frac{(it)^n}{n!} \mu_n$$

Il est aussi possible d'effectuer le développement de la fonction $\ln(\langle e^{iXt} \rangle_X)$, on obtient alors un ensemble de coefficients $\kappa_n$, que l'on définit de la manière suivante :

$$\ln\left(\langle e^{iXt}\rangle_X\right) = \sum_{n=0}^{\infty} \frac{(it)^n}{n!}\kappa_n$$

Chaque $\kappa_n$ ainsi défini est le cumulant d'ordre $n$ de la distribution f. Les deux premiers cumulants sont la moyenne et la variance de la distribution.

De plus si $X$ et $Y$ sont deux variables aléatoires distribuées selon f et g respectivement, et dont les cumulants d'ordre $n$ sont respectivement $\kappa_n[f]$ et $\kappa_n[g]$, alors les cumulants d'ordre $n$ de la distribution $h$ associée à la variable aléatoire $Z = pX + qY$, sont donnés par:

$$\kappa_n[h] = p^n\kappa_n[f] + q^n\kappa_n[g]$$

De plus on sait que toute distribution, qui résulte de la combinaison de m variables aléatoires peut-être représentée par un développement, connu sous le nom de développement d'Edgeworth et ayant la forme suivante :

$$F_n(x) = \left[1 + \sum_{j=1}^{\infty} \frac{1}{n^{j/2}} P_j\left(\kappa_1,\cdots,\kappa_j,x\right)\right]\Psi(x)$$

Dans cette équation les variables sont les suivantes :

- $\Psi(x)$ est une fonction de référence au choix (par exemple Gaussienne)
- $\kappa_p$ est le cumulant d'ordre $p$ de la distribution des erreurs d'orbite et/ou d'horloge
- $P_j$ est un polynôme d'ordre 3$j$ en x, qui fait intervenir les $j$ premiers $\kappa_p$ dans ses coefficients, et dont l'expression dépend du choix de $\Psi(x)$.
- $n$ représente le nombre de variables combinées pour obtenir $x$ De plus on sait que ce développement converge lorsque $n$ tend vers $\infty$.

En s'appuyant sur les concepts mathématiques ci-dessus, l'invention propose la détermination de la première erreur de position du récepteur de la manière suivante :

- Un dispositif de transmission 103 fournit les informations sur la distribution des erreurs de position et de synchronisation des satellites sous la forme de cumulants d'ordre supérieur à deux de cette distribution. Cette transmission est réalisée pour chacune des $N_S$ sources de signal de positionnement (par exemple des satellites émettant un signal respectant la norme GPS)

- Le récepteur détermine sa position et un temps de référence en utilisant une combinaison linéaire des mesures de (pseudo-)distances $\rho_j$ faites entre son antenne et les $N_S$ sources de signal utilisés pour le positionnement.

- Le récepteur détermine les $m$ premiers cumulants ($K_n$) de la première distribution de l'erreur associée à sa position, à partir des cumulants $\kappa_{i,j}$ transmis, en utilisant la relation suivante:

$$K_{n,p} = \sum_{j=1}^{N_S} \left(M_{p,j}\right)^n \kappa_{n,j}$$

Avec $n = 1,\cdots,m$ représentant l'ordre du cumulant, $j$ le satellite, $M_{p,j}$ le coefficient $p,j$ de la matrice qui permet de déterminer la deuxième position du récepteur à partir des distances entre le récepteur et les satellites, $p$ représente la direction ($x, y$ ou $z$) pour laquelle le cumulant est déterminée.

Dans un mode de réalisation il est possible d'utiliser la méthode des moindres carrés pour déterminer la matrice $M_{p,j}$. Dans ce mode de réalisation le vecteur des distances entre le récepteur et les satellites se modélise de la manière suivante suivante :

$$\rho = \hat{G} X + \varepsilon$$

Dans cette équation $\rho = [\rho_1 \cdots \rho_{N_S}]$ est le vecteur des distances entre le récepteur et les satellites, $\varepsilon = [\varepsilon_1 \cdots \varepsilon_{N_S}]$ est le vecteur des erreurs des distances entre le récepteur et les satellites et $X = [x, y, z, \Delta t_{usr}]$ est le vecteur de la deuxième position et du décalage d'horloge du récepteur et

$$\hat{G} = \begin{bmatrix} e_x e_1 & e_y e_1 & e_z e_1 & c \\ \vdots & \vdots & \vdots & \vdots \\ e_x e_{N_S} & e_y e_{N_S} & e_z e_{N_S} & c \end{bmatrix}$$

est la matrice d'observation du problème. Dans la matrice $\hat{G}$, $c$ représente la vitesse de la lumière et $e_x e_j$ est le cosinus de l'angle entre le vecteur dans la *direction x* et le vecteur vers le satellite $j$.

En utilisant la méthode des moindres carrés, la relation entre la deuxième position du récepteur et les distances entre le récepteur et les satellites peut s'écrire $X_{est} = (\hat{G}^t \hat{C}^{-1} \hat{G})^{-1} \hat{G}^t \hat{C}^{-1} \rho$.

Dans cette relation $C = <\varepsilon \, \varepsilon^t>$ est la matrice de corrélation des erreurs. On peut alors déterminer dans ce mode de réalisation que $M = (\hat{G}^t \hat{C}^{-1} \hat{G})^{-1} \hat{G}^t \hat{C}^{-1}$.

- En utilisant le développement d'Edgeworth tronqué à l'ordre $m$, qui fait intervenir les premiers cumulants $K_n$, on détermine la première distribution $F$ qui approche la distribution de la première erreur associée au positionnement du récepteur.

Enfin cette distribution de la première erreur peut-être utilisée pour déterminer la dimension d'une zone de confiance (c'est-à-dire une zone dans laquelle la probabilité de trouver le récepteur est supérieure ou égale à un seuil déterminé). Il est possible de trouver cette zone de confiance est résolvant l'équation suivante.

$$\int_{-\infty}^{-R_p} F(x)dx + \int_{R_p}^{\infty} F(x)dx = P_{HMI}$$

Cette détermination doit être effectuée pour chaque direction d'espace (verticale, horizontale). $P_{HMI}$ représente la probabilité tolérée de non-intégrité, ceci pour s'assurer que ces $R_p$ sont inférieurs aux dimensions de la zone de tolérance (par exemple les rayons d'alerte utilisés dans la navigation civile).

Il aussi possible de trouver directement le risque de se trouver à l'extérieur de la zone de tolérance requise ($R_a$), pour ceci on peut utiliser l'équation suivante :

$$\int_{-\infty}^{-R_a} F(x)dx + \int_{R_a}^{\infty} F(x)dx < P_{HMI}$$

Le système tel que présenté dans cette invention nécessite certains prérequis avant d'être utilisé. Il est en particulier nécessaire que :

- L'ordre du développement utilisé pour déterminer la première distribution doit être connu à l'avance par le récepteur et par le ou les satellites
- Le calcul des deuxièmes cumulants doit se faire de façon à ce que le niveau de confiance de leur estimation soit cohérent avec l'exigence de probabilité de non-intégrité nécessaire au système global. Il est aussi nécessaire que l'approximation résultante reste conservative c'est-à-dire que l'on se soit assuré que les cumulants n'aient pas été sous évalués.
- Il est enfin nécessaire que la fonction de référence $\Psi(x)$ soit également connue à l'avance par le satellite et par le récepteur.

Dans un autre mode de réalisation du système celui-ci utilise la connaissance des cumulants jusqu'à l'ordre 4 ou 5, associés à l'erreur de position de chaque satellite, et/ou à l'erreur sur temps de traversée de la couche ionosphérique du signal de chaque satellite.

Ce calcul de la distribution de l'erreur est basé sur une combinaison des calibrations statistiques qui sont effectuées sur une longue période long terme et de contributions arrivant dans une courte période. Ces dernières sont plus réactives et sont basées par exemple sur l'observation des calculs de position/synchronisation/retard ionosphérique.

La diffusion des cumulants vers les récepteurs est réalisé avec un dispositif d'alerte et/ou par la remise à jour des valeurs des cumulants au cas où elles se révèleraient être inadaptées aux besoins d'intégrité suite à un changement de l'état du système.

La distribution des premières erreurs est réalisé en utilisant les cumulants diffusés et modélisant la fonction de référence $\Psi$ par une gaussienne centrée sur le premier cumulant d'ordre 1 et de largeur le premier cumulant d'ordre 2

Ensuite on peut évaluer la disponibilité du service et donc la zone dans laquelle probabilité de présence du récepteur dépasse un seuil en utilisant les équations précédentes.

Le premier dispositif de détermination 104 des positions du ou des satellites peut être localisé au sol ou dans un des satellites.

Les différents dispositifs de détermination décrits dans cette invention peuvent être des ordinateurs ou des processeurs programmés de manière à réaliser les différentes opérations réalisées par les dispositifs. Il est aussi possible d'utiliser des composants dédiés, des circuits de logique programmable, des réseaux logiques programmables (connus aussi sous l'acronyme anglais FPGA pour Field-Programmable Gate Array) ou des circuits intégrés propre à une application (connus aussi sous l'acronyme anglais ASIC pour Application-Specific Integrated Circuit) programmés de manière à réaliser les différentes opérations réalisées par les dispositifs.

La présente invention peut également s'implémenter à partir d'éléments matériels et logiciels. Elle peut être disponible en tant que produit programme d'ordinateur sur un support lisible par ordinateur. Le support peut être électronique, magnétique, optique, électromagnétique ou être un support de diffusion de type infrarouge. De tels supports sont par exemple, des mémoires à semi-conducteur (Random Access Memory RAM, Read-Only Memory ROM), des bandes, des disquettes ou disques magnétiques ou optiques (Compact Disk - Read Only Memory (CD-ROM), Compact Disk - Read/Write (CD-R/W) and DVD).

## Revendications

1. Système de détermination d'une distribution d'une erreur de position d'un récepteur (102) de signaux de localisation, lesdits signaux étant envoyés par au moins un satellite, ledit système comportant ;

   • ledit récepteur (102) dont une position est dite première position et est affectée par une erreur, dite première erreur, présentant une distribution, dite première distribution;
   • un premier dispositif de détermination (104) d'au moins une position dudit ou d'au moins un dit ou de chaque dit satellite, dite deuxième position,
   • un dispositif de transmission (103) de ladite ou d'au moins une dite ou de chaque dite deuxième position dudit premier dispositif de détermination vers ledit récepteur,
   ledit système étant **caractérisé en ce que**
   • ladite première distribution est définie par au moins un premier cumulant, d'ordre supérieur à 2,
   • ledit premier dispositif est en outre adapté pour la détermination d'au moins un deuxième cumulant, d'ordre supérieur à 2, représentatif d'une deuxième distribution d'une deuxième erreur sur ladite deuxième position,
   • ledit dispositif de transmission (103) est en outre adapté pour la transmission dudit ou d'au moins un dit ou de chaque dit deuxième cumulant dudit premier dispositif de détermination vers ledit récepteur,
   • et **en ce que** ledit récepteur comporte:

      o un deuxième dispositif de détermination (105) dudit ou d'au moins un dit ou de chaque dit premier cumulant, à partir de ladite deuxième position, dudit deuxième cumulant et d'un modèle de détermination de ladite première position du récepteur à partir de distances entre ledit récepteur et ledit ou lesdits satellites et
      o un troisième dispositif de détermination (106) de ladite première distribution, à partir dudit ou d'au moins un dit ou de chaque dit premier cumulant.

2. Système selon la revendication 1 dans lequel ledit deuxième dispositif de détermination (105) est adapté pour appliquer ledit modèle audit ou auxdits deuxièmes cumulants.

**3.** Système selon la revendication 1 ou 2 dans lequel ledit premier dispositif de détermination est en outre adapté pour déterminer lesdits deuxièmes cumulants d'ordre 1 à 5, et dans lequel ledit deuxième dispositif de détermination est en outre adapté pour déterminer lesdits premiers cumulants d'ordre 1 à 5.

**4.** Système selon l'une des revendications 1 à 3 dans lequel ledit troisième dispositif est adapté en outre pour utiliser un développement d'Edgeworth.

**5.** Procédé de détermination d'une distribution d'une erreur de position d'un récepteur (102) de signaux de localisation, lesdits signaux étant envoyés par au moins un satellite, ledit procédé comportant ;

• une étape de réception, par un récepteur (102), desdits signaux de localisation satellitaire, une position dudit récepteur étant dite première position et étant affectée par une erreur, dite première erreur, présentant une distribution, dite première distribution,
• une première étape de détermination, par un premier dispositif de détermination (104), d'au moins une position dudit ou d'au moins un dit ou de chaque dit satellite, dite deuxième position,
• une étape de transmission, par un dispositif de transmission (103), de ladite ou d'au moins une dite ou de chaque dite deuxième position dudit premier dispositif de détermination vers ledit récepteur,
ledit procédé étant **caractérisé en ce que**
• ladite première distribution est définie par au moins un premier cumulant, d'ordre supérieur à 2,
• ladite première étape de détermination est en outre adaptée pour la détermination d'au moins un deuxième cumulant, d'ordre supérieur à 2, représentatif d'une deuxième distribution d'une deuxième erreur sur ladite deuxième position,
• ladite étape de transmission est en outre adaptée pour la transmission dudit ou d'au moins un dit ou de chaque dit deuxième cumulant, associé à ladite deuxième position dudit premier dispositif de détermination vers ledit récepteur,
• de plus ledit procédé comporte :

o une deuxième étape de détermination, par un deuxième dispositif de détermination dudit récepteur, dudit ou d'au moins un dit ou de chaque dit premier cumulant, à partir de ladite deuxième position, dudit deuxième cumulant et d'un modèle de détermination de ladite première position du récepteur à partir de distances entre ledit récepteur et ledit ou lesdits satellites et
o une troisième étape de détermination par un troisième dispositif de détermination dudit récepteur, de ladite première distribution, à partir dudit ou d'au moins un dit ou de chaque dit premier cumulant.

**6.** Procédé selon la revendication 5 dans lequel ladite deuxième étape de détermination est adaptée pour appliquer ledit modèle audit ou auxdits deuxièmes cumulants.

**7.** Procédé selon la revendication 5 ou 6 dans lequel ladite première étape de détermination de détermination est en outre adaptée pour déterminer lesdits deuxièmes cumulants d'ordre 1 à 5, et dans lequel ladite deuxième étape de détermination est en outre adaptée pour déterminer lesdits premiers cumulants d'ordre 1 à 5.

**8.** Procédé selon l'une des revendications 5 à 7 dans lequel ladite troisième étape de détermination est adaptée en outre pour utiliser un développement d'Edgeworth.

**Patentansprüche**

**1.** System zur Bestimmung einer Verteilung eines Positionsfehlers eines Empfängers (102) von Lokalisierungssignalen, wobei die Signale von zumindest einem Satelliten gesendet werden, wobei das System aufweist:

• den Empfänger (102), von dem eine Position als erste Position bezeichnet wird und von einem als erster Fehler bezeichneten Fehler betroffen ist, aufweisend eine als erste Verteilung bezeichnete Verteilung,
• eine erste Bestimmungsvorrichtung (104) zumindest einer als zweite Position bezeichneten Position des oder zumindest eines oder jedes Satelliten,
• eine Übertragungsvorrichtung (103) der oder zumindest einer oder jeder zweiten Position der ersten Bestimmungsvorrichtung an den Empfänger,
wobei das System **dadurch gekennzeichnet ist, dass**
• die erste Verteilung von zumindest einer ersten Kumulante der Ordnung größer als 2 definiert ist,

• die erste Vorrichtung ferner für die Bestimmung zumindest einer zweiten Kumulante der Ordnung größer als 2 geeignet ist, die für eine zweite Verteilung eines zweiten Fehlers auf der zweiten Position repräsentativ ist,
• die Übertragungsvorrichtung (103) ferner für die Übertragung der oder zumindest einer oder jeder zweiten Kumulante der ersten Bestimmungsvorrichtung an den Empfänger geeignet ist,
• und dass der Empfänger aufweist:

◦ eine zweite Bestimmungsvorrichtung (105) der oder zumindest einer oder jeder ersten Kumulante ausgehend von der zweiten Position, der zweiten Kumulante und eines Bestimmungsmodells der ersten Position des Empfängers ausgehend von Entfernungen zwischen dem Empfänger und dem oder den Satelliten und
◦ eine dritte Bestimmungsvorrichtung (106) der ersten Verteilung ausgehend von der oder zumindest einer oder jeder ersten Kumulante.

**2.** System nach Anspruch 1, wobei die zweite Bestimmungsvorrichtung (105) für die Anwendung des Modells auf die zweite(n) Kumulante(n) geeignet ist.

**3.** System nach Anspruch 1 oder 2, wobei die erste Bestimmungsvorrichtung ferner für die Bestimmung der zweiten Kumulanten der Ordnung 1 bis 5 geeignet ist, und wobei die zweite Bestimmungsvorrichtung ferner für die Bestimmung der ersten Kumulanten der Ordnung 1 bis 5 geeignet ist.

**4.** System nach einem der Ansprüche 1 bis 3 wobei die dritte Vorrichtung ferner für die Verwendung einer Edgeworth-Entwicklung geeignet ist.

**5.** Verfahren zur Bestimmung einer Verteilung eines Positionsfehlers eines Empfängers (102) von Lokalisierungssignalen, wobei die Signale von zumindest einem Satelliten gesendet werden, wobei das Verfahren aufweist:

• einen Empfangsschritt eines Empfängers (102) der Satelliten-Lokalisierungssignale, wobei eine Position des Empfängers als erste Position bezeichnet wird und von einem als erster Fehler bezeichneten Fehler betroffen ist, aufweisend eine als erste Verteilung bezeichnete Verteilung,
• einen ersten Bestimmungsschritt einer ersten Bestimmungsvorrichtung (104) zumindest einer als zweite Position bezeichneten Position des oder zumindest eines oder jedes Satelliten,
• einen Übertragungsschritt einer Übertragungsvorrichtung (103) der oder zumindest einer oder jeder zweiten Position der erste Bestimmungsvorrichtung an den Empfänger,
wobei das Verfahren **dadurch gekennzeichnet ist, dass**
• die erste Verteilung von zumindest einer ersten Kumulante der Ordnung größer als 2 definiert ist,
• der erste Bestimmungsschritt ferner für die Bestimmung zumindest einer zweiten Kumulante der Ordnung größer als 2 geeignet ist, die für eine zweite Verteilung eines zweiten Fehlers auf der zweiten Position repräsentativ ist,
• der Übertragungsschritt ferner für die Übertragung der oder zumindest einer oder jeder zweiten Kumulante, die der zweiten Position der ersten Bestimmungsvorrichtung zugeordnet ist, an den Empfänger geeignet ist,
• wobei das Verfahren zusätzlich aufweist:

◦ einen zweiten Bestimmungsschritt einer zweiten Bestimmungsvorrichtung des Empfängers der oder zumindest einer oder jeder ersten Kumulante ausgehend von der zweiten Position, der zweiten Kumulante und eines Bestimmungsmodells der ersten Position des Empfängers ausgehend von Entfernungen zwischen dem Empfänger und dem oder den Satelliten und
◦ einen dritten Bestimmungsschritt einer dritten Bestimmungsvorrichtung des Empfängers der ersten Verteilung ausgehend von der oder zumindest einer oder jeder ersten Kumulante.

**6.** Verfahren nach Anspruch 5, wobei der zweite Bestimmungsschritt für die Anwendung des Modells auf die zweite(n) Kumulante(n) geeignet ist.

**7.** Verfahren nach Anspruch 5 oder 6, wobei der erste Bestimmungsschritt ferner für die Bestimmung der zweiten Kumulanten der Ordnung 1 bis 5 geeignet ist, und wobei der zweite Bestimmungsschritt ferner für die Bestimmung der ersten Kumulanten der Ordnung 1 bis 5 geeignet ist.

**8.** Verfahren nach einem der Ansprüche 5 bis 7, wobei der dritte Bestimmungsschritt ferner für die Verwendung einer Edgeworth-Entwicklung geeignet ist.

**Claims**

1. System for determining a distribution of a position error of a receiver (102) for location signals, the signals being sent by at least one satellite, the system comprising:

   • the receiver (102), one position of which is referred to as the first position and is affected by an error, referred to as the first error, having a distribution which is referred to as a first distribution;
   • a first determination device (104) for determining at least one position of the or at least one or each satellite, referred to as the second position,
   • a transmission device (103) for transmitting the or at least one or each second position of the first determination device to the receiver,
   the system being **characterised in that**
   • the first distribution is defined by means of at least a first cumulant of order greater than 2,
   • the first device is further capable of determining at least a second cumulant, of order greater than 2, representative of a second distribution of a second error at the second position,
   • the transmission device (103) is further capable of transmitting the or at least one or each second cumulant of the first determination device to the receiver,
   • and **in that** the receiver comprises:

     ◦ a second determination device (105) for determining the or at least one or each first cumulant from the second position of the second cumulant and a model for determining the first position of the receiver from distances between the receiver and the satellite(s), and
     ◦ a third determination device (106) for determining the first distribution from the or at least one or each first cumulant.

2. System according to claim 1, wherein the second determination device (105) is capable of applying the model to the second cumulant(s).

3. System according to claim 1 or claim 2, wherein the first determination device is further capable of determining the second cumulants of order of from 1 to 5, and wherein the second determination device is further capable of determining the first cumulants of order of from 1 to 5.

4. System according to any one of claims 1 to 3, wherein the third device is further capable of using an Edgeworth development.

5. Method for determining a distribution of a position error of a receiver (102) for location signals, the signals being sent by at least one satellite, the method comprising:

   • a step for receiving via a receiver (102) satellite location signals, a position of the receiver being referred to as the first position and being affected by an error, referred to as the first error, having a distribution which is referred to as a first distribution;
   • a first determination step for determining, via a first determination device (104), at least one position of the or at least one or each satellite, referred to as the second position,
   • a transmission step for transmitting, via a transmission device (103), the or at least one or each second position of the first determination device to the receiver,
   the method being **characterised in that**
   • the first distribution is defined by means of at least a first cumulant of order greater than 2,
   • the first determination step is further capable of determining at least a second cumulant, of order greater than 2, representative of a second distribution of a second error at the second position,
   • the transmission step is further capable of transmitting the or at least one or each second cumulant associated with the second position of the first determination device to the receiver,
   • the method further comprises:

     ◦ a second determination step for determining, via a second determination device of the receiver, the or at least one or each first cumulant from the second position of the second cumulant and a model for determining the first position of the receiver from distances between the receiver and the satellite(s), and
     ◦ a third determination step for determining, via a third determination device of the receiver, the first distribution from the or at least one or each first cumulant.

6. Method according to claim 5, wherein the second determination step is capable of applying the model to the second cumulant(s).

7. Method according to claim 5 or 6, wherein the first determination step is further capable of determining the second cumulants in the order of from 1 to 5, and wherein the second determination step is further capable of determining the first cumulants of order of from 1 to 5.

8. Method according to any one of claims 5 to 7, wherein the third determination step is further capable of using an Edgeworth development.

FIG.1